# EUROPEAN PATENT SPECIFICATION

(11) **EP 2 422 975 B1**
(45) Date of publication and mention of the grant of the patent: **08.04.2015**
(21) Application number: 10761491.9
(22) Date of filing: 04.02.2010
(51) Int. Cl.: B32B 27/00, B01D 69/12, B01D 71/26, B01D 71/48, H01M 4/88, H01M 8/02, H01M 8/10

(54) **LAMINATE AND METHOD FOR PRODUCING SAME**
LAMINAT UND HERSTELLUNGSVERFAHREN DAFÜR
STRATIFIÉ ET PROCÉDÉ POUR PRODUIRE CELUI-CI

(30) Priority: 30.03.2009 JP 2009083058
(43) Date of publication of application: 29.02.2012
(73) Proprietor: W.L. Gore & Associates, Co., Ltd., Tokyo 108-0075 (JP)
(72) Inventor: SUGIOKA, Mikimasa, Tokyo 1080075 (JP); MATSUURA, Toyohiro, Tokyo 1080075 (JP); YAMADA, Hideki, Tokyo 1080075 (JP)
(74) Representative: Shanks, Andrew
(86) International application number: PCT/JP2010/052006
(87) International publication number: WO 2010/116789

(56) References cited:
- JP-A- 2006 257 399
- JP-A- 2008 251 376
- JP-A- 2008 291 408

## Description

### TECHNICAL FIELD

The present invention relates to a laminate in which a layer containing an ion-exchange resin is laminated on a specific release film, and a method for producing the same.

### BACKGROUND ART

It is commonly known that a release film is used as a support base for forming a polymer layer. Such a release film requires a property which enables peeling the objective polymer layer after formation of the polymer layer, i.e., releasability. Furthermore, the release film often requires, in addition to releasability, one or more physical properties such as heat resistance, chemical resistance, dimensional stability, handling properties, mechanical strength and antistaining properties according to properties of a polymer layer to be formed on the surface.

Typical examples of the release film include a polyester film, a polyolefin film, a silicone-based release coated film and a fluorine-based release coated film. These release films are selected and employed, individually and specifically, according to the material and coating conditions of a layer to be formed on the surface. Specific examples of the polyester film include a polyethylene terephthalate (PET) film and a polyethylene naphthalate (PEN) film. Although these polyester films are commonly used as casting papers because of excellent heat resistance, releasability or acid resistance may become insufficient according to use. Specific examples of the polyolefin film include a polypropylene (PP) film and a polymethylpentene (TPX) film. Although these polyolefin films are used as release films which require chemical resistance, heat resistance, dimensional stability or mechanical strength may become insufficient according to use. Due to strong liquid repellency, a coated film becomes unstable and it also may be impossible to form the coated film. Furthermore, a silicone-based release coated film may result in a problem of staining properties which causes migration of a silicon (Si) component to a coated film, and of change of releasability with time. Due to strong liquid repellency, a fluorine-based release coated film cannot form a stable coated film and releasability may become insufficient. As described above, the release film may have both advantageous and disadvantageous characteristics according to the kind, and compatibility with a layer to be formed on the surface cannot be necessarily predicted.

Incidentally, a polymer electrolyte fuel cell include a polymer electrolyte membrane or catalyst layer containing an ion-exchange resin. When such as polymer electrolyte membrane is formed by a casting method or a catalyst layer is formed by a coating method, a release film is sometimes used as a supporting base thereof. For example, Patent Document 1 discloses, as a release film which causes neither wrinkles nor shrinkage in the case of forming an electrolyte membrane or electrode membrane for a polymer electrolyte fuel cell, and is satisfactory in releasability from these films, and also does not stain these membranes, a base film comprising a supporting film made of polyester, etc. and a fluorine-based resin film laminated on the supporting film.

Patent Document 2 discloses, as a release film having excellent heat resistance, releasability and antistaining properties, a cyclic polyolefin resin which is a copolymer of ethylene and norbornene. Although Patent Document 2 describes that this release film is particularly useful for prevention of adhesion of a printed circuit board with a press hot plate, or prevention of adhesion of a prepreg with a press forming die, there is no suggestion with respect to releasability of a layer containing an ion-exchange resin, and other characteristics.

### PRIOR ART DOCUMENMTS

(Patent Document 1): Japanese Unexamined patent Publication (Kokai) No. 2003-285396
(Patent Document 2): Japanese Unexamined patent Publication (Kokai) No. 2006-257399

### SUMMARY OF THE INVENTION

### Problems to be Solved by the Invention

The base film comprising a supporting film made of polyester, and a fluorine-based resin film laminated on a supporting film of polyester, etc. disclosed in Patent Document 1 may include unevenness defects referred to as "fish eyes" because the fluorine-based resin film is an extrusion molded article. Since some "fish eyes" may include a convex portion measuring around 10 µm in height, a problem occurs that when a 20 µm thick thin layer made of an ion-exchange resin is formed on the surface of base film including these defects using a casting method, the thickness of the ion-exchange resin layer largely varies. The fluorine-based resin film is commonly expensive and production costs of the ion-exchange resin layer increase.

Accordingly, an object of the present invention is to provide a laminate in which a layer containing an ion-exchange resin is combined with a release film which exhibits satisfactory releasability to the layer containing an ion-exchange resin. Another object thereof is to provide a laminate in which a layer containing an ion-exchange resin is combined with a release film which makes the thickness of the layer containing an ion-exchange resin more uniform. Still another object thereof is to provide a laminate in which a layer containing an ion-exchange resin is combined with a release film which does not stain the layer containing an ion-exchange resin. Another object of the present invention is to provide a laminate which reduces production costs of an ion-exchange resin layer, etc. A further object of the present invention is to provide a method for producing the above laminates.

### Means for Solving the Problems

According to the present invention, there is provided:
(1) A laminate comprising a release film made of a cycloolefinic copolymer, and a layer containing an ion-exchange resin laminated on the release film.'
   According to the present invention, there is also provided:
(2) The laminate according to (1), wherein the layer containing an ion-exchange resin is an electrolyte membrane or electrode membrane for a polymer electrolyte fuel cell.
   According to the present invention, there is also provided:
(3) The laminate according to (1), wherein the layer containing an ion-exchange resin is a membrane electrode assembly for a polymer electrolyte fuel cell.
   According to the present invention, there is also provided:
(4) The laminate according to any one of (1) to (3), wherein a glass transition temperature (Tg) of the cycloolefinic copolymer is 120°C or higher.
   According to the present invention, there is also provided:
(5) The laminate according to any one of (1) to (4), wherein the cycloolefinic copolymer is a copolymer of ethylene and norbornene.
   According to the present invention, there is also provided:
(6) The laminate according to any one of (1) to (5), which further comprises a base film laminated on the side of the release film opposite to the layer containing an ion-exchange resin.
   According to the present invention, there is also provided:
(7) The laminate according to (6), which further comprises another release film laminated on the side of the base film opposite to the release film.
   According to the present invention, there is also provided:
(8) The laminate according to (6) or (7), wherein the base film is a film made of polyethylene terephthalate (PET), polyethylene naphthalate (PEN) or polypropylene (PP). According to the present invention, there is also provided:
(9) A method for producing a laminate, characterised **in that** a layer containing an ion-exchange resin is laminated on one side of a release film made of a cycloolefinic copolymer and a base film is laminated on the opposite side of the release film, the method comprising melt-extruding the cycloolefinic copolymer into a film to make a release film, and then laminating the release film on the base film.
   According to the present invention, there is also provided:
(10) A method for producing a laminate, **characterized in that** a layer containing an ion-exchange resin is laminated on one side of a release film made of a cycloolefinic copolymer and a base film is laminated on the opposite side of the release film, the method comprising preparing a solution of the cycloolefinic copolymer, and coating the solution on the base film.

### EFFECTS OF THE INVENTION

In the laminate according to the present invention, since a layer containing an ion-exchange resin was laminated on a release film made of a cycloolefinic copolymer, releasability between the layer containing an ion-exchange resin and the release film becomes satisfactory. The laminate according to the present invention can be formed by forming a film of an ion-exchange resin using a casting method. Furthermore, since the layer containing an ion-exchange resin in the laminate according to the present invention is satisfactory in smoothness of the release film, the thickness becomes uniform. It is also possible to prevent stains, involved in the release film, of the layer containing an ion-exchange resin in the laminate according to the present invention. Furthermore, production costs of the layer containing an ion-exchange resin are reduced by using the laminate according to the present invention.

### BRIEF DESCRIPTION OF THE DRAWINGS

Figs. 1(A) to (C) are sectional views schematically showing various embodiments of a laminate according to the present invention.
Fig. 2 is a bar graph showing a peeling strength in each laminate of Examples of the present invention and Comparative Examples.
Fig. 3 is a bar graph showing the number of defects (fish eyes) included in a release film used in each laminate of Examples of the present invention and Comparative Examples.

### Explanation of References

- 11, 21, 31:: Release film
- 12, 22, 32:: Ion-exchange resin layer
- 23, 33:: Base film
- 34: Another release film: Another release film

### MODE FOR CARRYING OUT THE INVENTION

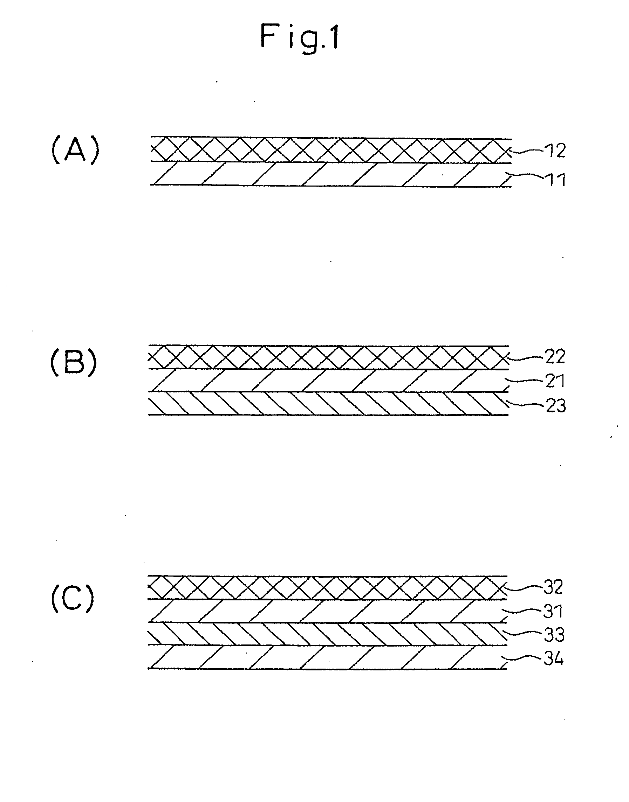

The laminate according to the present invention comprises a release film made of a cycloolefinic copolymer, and a layer containing an ion-exchange resin laminated on the release film. In Fig. 1, schematic sectional views (A) to (C) of various embodiments of the laminate according to the present invention are shown. Fig. 1(A) is a schematic sectional view showing a laminate in which an ion-exchange resin layer 12 is laminated on one side of a release film 11. Fig. 1(B) is a schematic sectional view showing a laminate in which an ion-exchange resin layer 22 is laminated on one side of a release film 21, and also a base film 23 is laminated on the side of the release film 21 opposite to the ion-exchange resin layer 22. Fig. 1(C) is a schematic sectional view showing a laminate in which an ion-exchange resin layer 32 is laminated on one side of a release film 31, a base film 33 is laminated on the side of the release film 31 opposite to the ion-exchange resin layer 22, and also another release film 34 is laminated on the side of the base film 33 opposite to the release film 31. Fig. 1(A) shows the basic constitution of the present invention and, particularly, the release film is made of a cycloolefinic copolymer, thereby exerting the effects of the present invention described above by means of a relation with the layer containing an ion-exchange resin. As shown in Fig. 1(B), the release film made of a cycloolefinic copolymer is reinforced, for example, by combining with a base film as a backing of the release film, and thus transportation properties and handling properties of the laminate can be enhanced. Furthermore, as shown in Fig. 1(C), by laminating an additional release film on the back side of the base film, for example, when a plurality of laminates are stored in the state of being laid one upon another, or a long laminate is stored in a rolled shape, blocking due to the contact of the ion-exchange resin layer with the base film can be prevented.

In the present invention, the cycloolefinic copolymer refers to an olefin-based copolymer obtained by copolymerizing at least one kind of a cyclic olefin. Specific examples of the cyclic olefin include cyclopentene, cyclohexene and cyclooctene; monocyclic olefin such as cyclopentadiene or 1,3-cyclohexadiene; dicyclic olefin such as bicyclo[2.2.1]hepta-2-ene (common name: norbornene), 5-methyl-bicyclo[2.2.1]hepta-2-ene, 5,5-dimethyl-bicyclo[2.2.1]hepta-2-ene, 5-ethyl-bicyclo[2.2.1]hepta-2-ene, 5-butyl-bicyclo[2.2.1]hepta-2-ene, 5-ethylidene-bicyclo[2.2.1]hepta-2-ene, 5-hexyl-bicyclo[2.2.1]hepta-2-ene, 5-octyl-bicyclo[2.2.1]hepta-2-ene, 5-octadecyl-bicyclo[2.2.1]hepta-2-ene, 5-methylidyne-bicyclo[2.2.1]hepta-2-ene, 5-vinyl-bicyclo[2.2.1]hepta-2-ene or 5-propenyl-bicyclo[2.2.1]hepta-2-ene; tricyclo[4.3.0.1^{2.5}]deca-3,7-diene (common name: dicyclopentadiene) or tricyclo[4.3.0.1^{2.5}]deca-3-ene; tricyclo[4.4.0.1^{2.5}]undeca-3,7-diene or tricyclo[4.4.0.1^{2.5}]undeca-3,8-diene, or tricyclo[4.4.0.1^{2.5}]undeca-3-ene which is a partially hydrogenated product (or an adduct of cyclopentadiene and cyclohexene) thereof; tricyclic olefin such as 5-cyclopentyl-bicyclo[2.2.1]hepta-2-ene, 5-cyclohexylbicyclo[2.2.1]hepta-2-ene, 5-cyclohexenylbicyclo[2.2.1]hepta-2-ene or 5-phenylbicyclo[2.2.1]hepta-2-ene; tetarcyclic olefin such as tetracyclo[4.4.0.1^{2.5}.1^{7.10}]dodeca-3-ene (sometimes referred simply to as tetracyclododecene), 8-methyltetracyclo[4.4.0.1^{2.5}.1^{7.10}]dodeca-3-ene, 8-ethyltetracyclo[4.4.0.1².⁵.1^{7.10}]dodeca-3-ene, 8-methylidenetetracyclo[4.4.0.1^{2.5}.1^{7.10}]dodeca-3-ene, 8-ethylidenetetracyclo[4.4.0.1^{2.5}.1^{7.10}]dodeca-3-ene, 8-vinyltetracyclo[4.4.0.1^{2.5}.1^{7.10}]dodeca-3-ene or 8-propenyltetracyclo[4.4.0.1^{2.5}.1^{7.10}]dodeca-3-ene; 8-cyclopentyltetracyclo[4.4.0.1^{2.5}.1^{7.10}]dodeca-3-ene, 8-cyclohexyltetracyclo[4.4.0.1^{2.5}.1^{7.10}]dodeca-3-ene, 8-cyclohexenyltetracyclo[4.4.0.1^{2.5}.1^{7.10}]dodeca-3-ene or 8-phenylcyclopentyl-tetracyclo[4.4.0.1^{2.5}.1^{7.10}]dodeca-3-ene; tetracyclo[7.4.1^{3.6}.0^{1.9}.0^{2.7}]tetradeca-4, 9, 11, 13-tetraene (sometimes referred to as 1,4-methano-1,4,4a,9a-tetrahydrofluorene) or tetracyclo[8.4.1^{4.7}.0^{1.10}.0^{3.8}]pentadeca-5,10,12,14-tetraene (sometimes referred to as 1,4-methano-1,4,4a,5,10,10a-hexahydroanthracene); pentacyclo[6.6.1.1^{3.6}.0^{2.7}.0^{9.14}]-4-hexadecene, pentacyclo[6.5.1.1^{3.6}.0^{2.7}.0^{9.13}]-4-pentadecene or pentacyclo[7.4.0.0^{2.7}.1^{3.6}.1^{10.13}]-4-pentadecene; heptacyclo[8.7.0.1^{2.9}.1^{4.7}.1^{11.17}. 0^{3.8}.0^{12.16}]-5-eicosene or heptacyclo[8.7.0.1^{2.9}.0^{3.8}.1^{4.7}.0^{12.17}.1^{13.16}]-14-eicosene; and polycyclic olefin such as a tetramer of cyclopentadiene. These cyclic olefins can be used alone, or two or more kinds of them can be used in combination. In the present invention, particularly preferable cyclic olefin is the above norbornene.

The olefin to be copolymerized with the cyclic olefin is preferably a-olefin, and specific examples thereof include ethylene or a-olefin having 2 to 20 carbon atoms, and preferably 2 to 8 carbon atoms, such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene or 1-eicosene. These a-olefins can be used alone, or two or more kinds of them can be used in combination. In the present invention, particularly preferable a-olefin is ethylene.

There is no particular limitation on the method of polymerization of a cyclic olefin with an a-olefin, and the polymerization can be conducted in accordance with a known method. The cycloolefinic copolymer to be used in the release film of the present invention is preferably an addition copolymer of ethylene and norbornene. In the addition copolymer of ethylene and norbornene, it is easy to obtain high Tg by increasing a molar fraction of norbornene. Tg of the cycloolefinic copolymer according to the present invention is usually 50°C or higher, preferably 100°C or higher, more preferably 120°C or higher, and most preferably 160°C or higher. As Tg becomes higher, retention of a film shape at a high temperature and releasability are excellent. In contrast, when Tg is too high, it is difficult to carry out a forming process. When a heat treatment is applied in the case of laminating the layer containing an ion-exchange resin to form a laminate, it is preferable to employ a cycloolefinic copolymer having Tg higher than the temperature of the heat treatment. The upper limit of Tg of a common cycloolefinic copolymer is about 250°C. Two more kinds of cycloolefinic copolymers each having different Tg may be used in combination.

It is possible to employ, as a method of forming a release film according to the present invention, a known melt-extrusion method using a T-die can be commonly used. As shown in Fig. 1(B) or 1(C), in the case of including a base film, it is possible to employ a method of laminating the film of a cycloolefinic copolymer formed by the above melt-extrusion method on a base film, and a method of coating a solution of a cycloolefinic copolymer on a base film (solution flow casting method). Regarding details of a method of forming a film of a cycloolefinic copolymer by a melt-extrusion method and a solution flow casting method, please refer to Japanese Unexamined Patent Publication (Kokai) No. 2007-112967. Some release films according to the present invention are commercially available and, for example, an addition copolymer of ethylene and norbornene, which is used preferably in the present invention, is commercially available from Polyplastics Co., Ltd. under the trademark registration "TOPAS".

When the base film is not combined, the thickness of the release film is commonly within a range from 50 to 150 µm, and preferably from 80 to 100 µm. When the base film is combined, the thickness of the release film can be comparatively decreased and is commonly within a range from 15 to 110 µm, and preferably from 20 to 60 µm. In both cases, the thickness of the release film can be appropriately set taking expected releasability, and handling properties and material costs of the laminate into consideration.

It is possible to use as the layer containing an ion-exchange resin to be laminated on the release film according to the present invention, an electrolyte membrane or electrode membrane for a polymer electrolyte fuel cell, or a membrane electrode assembly in which an electrode membrane is joined to both sides of an electrolyte membrane. Such an electrolyte membrane is not particularly limited as long as it has high proton (H⁺) conductivity and electrical insulating properties and also has gas impermeability, and may be a known polymer electrolyte membrane. Typical examples thereof include resins which contain a fluorine-containing polymer as a skeleton and also has a group such as a sulfonic acid group, a carboxyl group, a phosphoric acid group or a phosphone group. Since the thickness of the polymer electrolyte membrane exerts a large influence on resistance, a polymer electrolyte membrane having a smaller thickness is required as long as electrical insulating properties and gas impermeability are not impaired, and is specifically set within a range from 5 to 50 µm, and preferably from 10 to 30 µm. The material of the polymer electrolyte membrane in the present invention is not limited to an entirely fluorine-based polymer compound, or may be a mixture of a hydrocarbon-based polymer compound and an inorganic polymer compound, or a partially fluorine-based polymer compound containing both a C-H bond and a C-F bond in the polymer chain. Specific examples of the hydrocarbon-based polyelectrolyte include polyamide, polyacetal, polyethylene, polypropylene, acrylic resin, polyester, polysulfone or polyether, each having an electrolyte group such as a sulfonic acid group introduced therein, and a derivative thereof (aliphatic hydrocarbon-based polymer electrolyte); polystyrene having an electrolyte group such as a sulfonic acid group introduced therein; polyamide, polyamideimide, polyimide, polyester, polysulfone, polyetherimide, polyethersulfone or polycarbonate, each having an aromatic ring, and a derivative thereof (partially aromatic hydrocarbon-based polyelectrolyte); polyether ether ketone having an electrolyte group such as a sulfonic acid group introduced therein; and polyetherketone, polyethersulfone, polycarbonate, polyamide, polyamideimide, polyester or polyphenylene sulfide, and a derivative thereof (entirely aromatic hydrocarbon-based polymer electrolyte). Specific examples of the partially fluorine-based polyelectrolyte include a polystyrene-graft-ethylene tetrafluoroethylene copolymer or a polystyrene-graft-polytetrafluoroethylene, each having an electrolyte group such as a sulfonic acid group introduced therein, and a derivative thereof. Specific examples of the entirely fluorine-based polymer electrolyte film include Nafion® film (manufactured by DuPont), Aciplex® film (manufactured by Asahi Kasei Corporation) and Flemion® film (manufactured by Asahi Glass Co., Ltd.), each being made of perfluoropolymers having a sulfonic acid group in the side chain. The inorganic polymer compound may be a siloxane-based or silane-based organic silicon polymer compound, and in particular an alkylsiloxane-based organic silicon polymer compound, and specific examples thereof include polydimethylsiloxane and y-glycidoxypropyltrimethoxysilane. It is also possible to use, as the polymer electrolyte membrane, GORE-SELECT® (manufactured by JAPAN GORE-TEX INC.) which is a reinforced type solid polymer electrolyte membrane obtained by impregnating a porous expanded polytetrafluoroethylene membrane with a proton-conductive resin.

The electrode membrane for a polymer electrolyte fuel cell is not particularly limited as long as it contains catalyst particles and an ion-exchange resin, and a known electrode membrane can be used. It is possible to use, as the ion-exchange resin, the resin described for the above electrolyte membrane. The catalyst is usually made of a conductive material containing catalyst particles supported thereon. The catalyst particles may have a catalytic action on an oxidation reaction of hydrogen or a reductive reaction of oxygen, and it is possible to use, in addition to platinum (Pt) and other noble metals, iron, chromium, nickel, and an alloy thereof. The conductive material is suitably carbon-based particles, for example, carbon black, activated carbon and graphite, and fine powdered particles are used particularly suitably. Typical examples thereof include those obtained by supporting noble metal particles, for example, Pt particles and alloy particles made of Pt and other metals on carbon black particles having a surface area of 20 m²/g or more. Regarding a catalyst for an anode, since Pt is inferior in resistance to poisoning of carbon monoxide (CO), alloy particles made of Pt and ruthenium (Ru) are preferably used when a fuel containing CO such as methanol is used. The ion-exchange resin in the electrode membrane is a material which serves as a binder that supports a catalyst to form an electrode membrane, and forms a passage through which ions generated by the catalyst migrate. It is possible to use, as an ion-exchange resin, the materials described previously in relation to the solid polymer electrolyte membrane. The electrode membrane is preferably porous so that fuel, such as hydrogen or methanol, can be contacted with the catalyst as much as possible in an anode, whereas, an oxidizing agent gas such as oxygen or air can be contacted with the catalyst as much as possible in a cathode. It is suitable that the amount of the catalyst contained in the electrode membrane is within a range from 0.01 to 4 mg/cm², and preferably from 0.1 to 0.6 mg/cm².

It is possible to use, as the base film shown in Fig. 1(B) or 1(C), known various films made of polyester, polycarbonate, triacetyl cellulose, polyamide, aromatic polyamide, polyimide, polyetherimide, polyphenylene sulfide, polysulfone, polyethersulfone and polypropylene. Polyester such as polyethylene terephthalate (PET) or polyethylene naphthalate (PEN) or polypropylene (PP) is particularly preferable in view of heat resistance and mechanical characteristics. Commonly, the thickness of the base film may be set within a range from 25 to 100 µm, and preferably from 38 to 50 µm, taking transportation properties and handling properties of the laminate into consideration.

In the case of laminating a layer containing an ion-exchange resin on a release film made of a cycloolefinic copolymer, a laminate of the present invention can be obtained by coating a solution of an ion-exchange resin on the surface of the above release film, or the surface of a release film including a base film on one side, and removing the solvent by drying. The thickness of the layer containing an ion-exchange resin can be adjusted to the expected thickness by adjusting the concentration of the solution of an ion-exchange resin, or repeating coating and drying steps of an ion-exchange resin solution. When the layer containing an ion-exchange resin is an electrolyte membrane for a polymer electrolyte fuel cell, an electrolyte solution such as a commercially available Nafion^{®} solution can be coated on a release film, followed by drying. Alternately, a method of hot-pressing a solid polymer electrolyte membrane made separately to a release film is exemplified. When the layer containing an ion-exchange resin is an electrode membrane for a polymer electrolyte fuel cell, a solution or dispersion containing a component of an electrode membrane (catalyst ink) can be coated on a release film, followed by drying. When the layer containing an ion-exchange resin is a membrane electrode assembly for a polymer electrolyte fuel cell, as described above, an anode or cathode electrode membrane is formed on a release film, and then a polymer electrolyte membrane is joined to the electrode membrane by hot press and also the cathode or anode electrode membrane can be combined with the polymer electrolyte membrane. In the case of combining an electrode membrane with a polymer electrolyte membrane, a conventionally known method such as a screen printing method, a spray coating method or a decal method may be employed.

### EXAMPLES

The present invention will be described more specifically below by way of Examples and Comparative Examples.

### Example 1

A copolymer of ethylene and norbornene "TOPAS^{®} 6015" manufactured by Polyplastics Co., Ltd. was prepared as a release film. A solution (solid content: 20% by mass) of a perfluoropolymer having a sulfonic acid group in the side chain "Nafion® DE2021" manufactured by DuPont was prepared as a solution of an ion-exchange resin. Using a solution flow casting apparatus (control coater K202, manufactured by RK PPTNT COAT INSTRUMENTS), the above solution was cast on the above release film (size: 21 cm x 30 cm, thickness': 100 µm) and the obtained coated film was dried in an oven at 130°C to form an ion-exchange resin layer (thickness: 20 µm) on the release film.

### Example 2

A solution (solid content: 20% by mass) was prepared from a copolymer of ethylene and norbornene "TOPAS® 5013" manufactured by Polyplastics Co., Ltd., as a solution of a release film, in accordance with the method described in Japanese Unexamined Patent Publication (Kokai) No. 2007-112967. A polyethylene terephthalate (PET) film (size: 21 cm x 30 cm, thickness: 50 µm) manufactured by Mitsubishi Plastics, Inc. was prepared as a base film. Using a solution flow casting apparatus (control coater K202, manufactured by RK Print Coat Instruments Ltd.), the above solution was cast on the above release film and the obtained coated film was dried in an oven at 130°C to form a release film (thickness: 0.5 µm) on the base film. Furthermore, a solution (solid content: 20% by mass) of a perfluoropolymer having a sulfonic acid group in the side chain "Nafion® DE2021" manufactured by DuPont was prepared as a solution of an ion-exchange resin. Using a solution flow casting apparatus (control coater K202, manufactured by RK Print Coat Instruments Ltd.), the above solution was cast on the above release film and the obtained coated film was dried in an oven at 130°C to form an ion-exchange resin layer (thickness: 20 µm) on the release film.

### Comparative Example 1

A polyester film "Diafoil® T100" manufactured by Mitsubishi Plastics, Inc. was prepared as a release film. A solution (solid content: 20% by mass) of a perfluoropolymer having a sulfonic acid group in the side chain "Nafion® DE2021" manufactured by DuPont was prepared as a solution of an ion-exchange resin. Using a solution flow casting apparatus (control coater K202, manufactured by RK Print Coat Instruments Ltd.), the above solution was cast on the above release film (size: 21 cm x 30 cm, thickness: 50 µm) and the obtained coated film was dried in an oven at 130°C to form an ion-exchange resin layer (thickness: 20 µm) on the release film.

### Comparative Example 2

Polyolefin "Opulent^{®} TPX X44B" manufactured by Mitsui Chemicals, Inc. was prepared as a release film. A solution (solid content: 20% by mass) of a perfluoropolymer having a sulfonic acid group in the side chain "Nafion® DE2021" manufactured by DuPont was prepared as a solution of an ion-exchange resin. Using a solution flow casting apparatus (control coater K202, manufactured by RK Print Coat Instruments Ltd.), the above solution was cast on the above release film (size: 21 cm x 30 cm, thickness: 50 µm) and the obtained coated film was dried in an oven at 130°C to form an ion-exchange resin layer (thickness: 20 µm) on the release film.

### Comparative Example 3

A fluorine-based release coated film "FZ" manufactured by Unitika Limited was prepared as a release film. A solution (solid content: 20% by mass) of a perfluoropolymer having a sulfonic acid group in the side chain "Nafion® DE2021" manufactured by DuPont was prepared as a solution of an ion-exchange resin. Using a solution flow casting apparatus (control coater K202, manufactured by RK Print Coat Instruments Ltd.), the above solution was cast on the above release film (size: 21 cm x 30 cm, thickness: 50 µm) and the obtained coated film was dried in an oven at 130°C to form an ion-exchange resin layer (thickness: 20 µm) on the release film.

### Comparative Example 4

A fluorine-based laminate film "FLUOROJU® RL" manufactured by Mitsubishi Plastics, Inc. was prepared as a release film. A solution (solid content: 20% by mass) of a perfluoropolymer having a sulfonic acid group in the side chain "Nafion^{®} DE2021" manufactured by DuPont was prepared as solution of an ion-exchange resin. Using a solution flow casting apparatus (control coater K202, manufactured by RK PRINT COAT INSTRUMENTS), the above solution was cast on the above release film (size: 21 cm x 30 cm, thickness: 50 µm) and the obtained coated film was dried in an oven at 130°C to form an ion-exchange resin layer (thickness: 20 µm) on the release film.

### (Measurement of peeling strength)

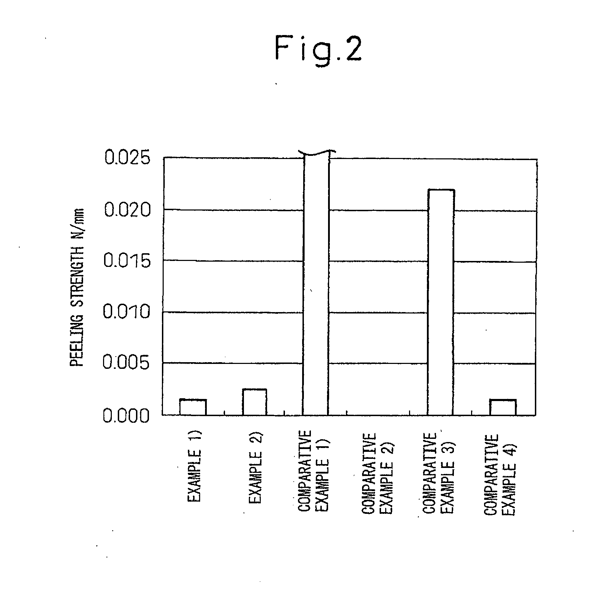

A peeling strength of the ion-exchange resin layers formed in Examples and Comparative Examples to the release film was measured. A tensile tester STROGRAPH R3 manufactured by Toyo Seiki Seisaku-Sho, Ltd. was used as a measuring apparatus. A test piece was (width: 15 mm) was made from each sample and a peeling strength was measured under the conditions of a distance between chucks of 80 mm and a testing speed of 20 mm/min. The measurement results are shown in Fig. 2.

In Fig. 2, Comparative Example 2 shows that since a Nafion® solution caused liquid repellency to the polyolefin-based release film, a coated film was not formed and the peeling strength could not be measured. Comparative Example 1 shows that since a Nafion® film caused cohesion failure, a peeling strength to the polyester film could not be measured. In contrast, a peeling strength of the fluorine-based release coated films of Examples 1 and 2 was significantly lower than that of the fluorine-based release coated film of Comparative Example 3 and identical to that of the fluorine-based laminate film of Comparative Example 4.

### (Measurement of fish eye)

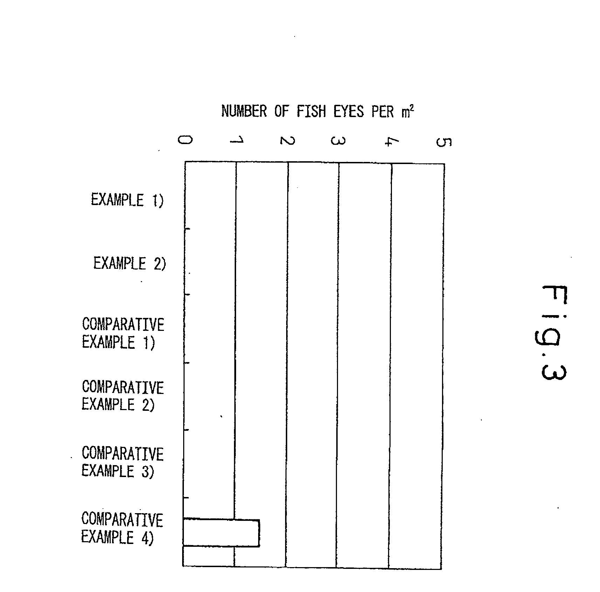

The number of defects (fish eyes) of the release films in Examples and Comparative Examples was measured. A defect inspection equipment LSC-3100 manufactured by Mitsubishi Rayon Co., Ltd. was used as a measuring apparatus. With respect to each release film, the number of fish eyes each having a major diameter of 0.5 mm or more was measured under the condition of 15 m/minute. The measurement results are shown in Fig. 3.

In Fig. 3, Examples 1 and 2, as well as Comparative Examples 1 to 3, show that fish eyes each having a diameter of 0.5 mm or more were not detected in the release film. In contrast, fish eyes were detected in the fluorine-based laminate film of Comparative Example 4.

### INDUSTRIAL APPLICATION

The present invention provides a laminate comprising a release film made of a cycloolefinic copolymer, and a layer containing an ion-exchange resin laminated on the release film, the laminate having satisfactory releasability between the layer containing an ion-exchange resin and the release film. Since the release film according to the present invention does not contain a staining substance such as silicon and is also free from defects such as fish eyes, the layer containing an ion-exchange resin is not stained after peeling and also the thickness becomes uniform. Also, the release film according to the present invention is more advantageous cost-wise than fluorine-based and other release films in that it is made of a hydrocarbon-based material. The present invention is particularly useful in the case of producing ion-exchange resin-containing members, such as a polymer electrolyte membrane, an electrode membrane and a membrane electrode assembly in a polymer electrolyte fuel cell.

## Claims

1. A laminate comprising a release film made of a cycloolefinic copolymer, and a layer containing an ion-exchange resin laminated on the release film.

2. The laminate according to claim 1, wherein the layer containing an ion-exchange resin is an electrolyte membrane or electrode membrane for a polymer electrolyte fuel cell.

3. The laminate according to claim 1, wherein the layer containing an ion-exchange resin is a membrane electrode assembly for a polymer electrolyte fuel cell.

4. The laminate according to any one of claims 1 to 3, wherein a glass transition temperature (Tg) of the cycloolefinic copolymer is 120°C or higher.

5. The laminate according to any one of claims 1 to 4, wherein the cycloolefinic copolymer is a copolymer of ethylene and norbornene.

6. The laminate according to any one of claims 1 to 5, which further comprises a base film laminated on the side of the release film opposite to the layer containing an ion-exchange resin.

7. The laminate according to claim 6, which further comprises another release film laminated on the side of the base film opposite to the release film.

8. The laminate according to claim 6 or 7, wherein the base film is a film made of polyethylene terephthalate (PET), polyethylene naphthalate (PEN) or polypropylene(PP).

9. A method for producing a laminate, **characterized in that** a layer containing an ion-exchange resin is laminated on one side of a release film made of a cycloolefinic copolymer and a base film is laminated on the opposite side of the release film, the method comprising melt-extruding the cycloclefinic copolymer into a film to make a release film, and then laminating the release film on the base film.

10. A method for producing a laminate, **characterized in that** a layer containing an ion-exchange resin is laminated on one side of a release film made of a cycloolefinic copolymer and a base film is laminated on the opposite side of the release film, the method comprising preparing a solution of the cycloolefinic copolymer, and coating the solution on the base film.

## Patentansprüche

1. Laminat umfassend einen Trennfilm, der aus einem cycloolefinischen Copolymer hergestellt ist, und eine Schicht, die ein Ionenaustauschharz enthält und auf den Trennfilm auflaminiert ist.

2. Laminat nach Anspruch 1, wobei die Schicht, die ein Ionenaustauschharz enthält, eine Elektrolytmembran oder Elektrodenmembran für eine Polymerelektrolyt-Brennstoffzelle ist.

3. Laminat nach Anspruch 1, wobei die Schicht, die ein Ionenaustauschharz enthält, eine Membranelektrodenanordnung für eine Polymerelektrolyt-Brennstoffzelle ist.

4. Laminat nach einem der Ansprüche 1 bis 3, wobei eine Glasübergangstemperatur (Tg) des cycloolefinischen Copolymers 120 °C oder mehr beträgt.

5. Laminat nach einem der Ansprüche 1 bis 4, wobei das cycloolefinische Copolymer ein Copolymer von Ethylen und Norbornen ist.

6. Laminat nach einem der Ansprüche 1 bis 5, das des Weiteren einen Grundfilm umfasst, der auf die Seite des Trennfilms der ein Ionenaustauschharz enthaltenden Schicht gegenüber auflaminiert ist.

7. Laminat nach Anspruch 6, das des Weiteren eine weitere Trennfolie umfasst, die auf die Seite des Grundfilms dem Trennfilm gegenüber auflaminiert ist.

8. Laminat nach Anspruch 6 oder 7, wobei der Grundfilm ein Film ist, der aus Polyethylenterephthalat (PET), Polyethylennaphthalat (PEN) oder Polypropylen (PP) hergestellt ist.

9. Verfahren zur Herstellung eines Laminats, **dadurch gekennzeichnet, dass** eine Schicht, die ein Ionenaustauschharz enthält, auf eine Seite eines Trennfilm auflaminiert ist, der aus einem cycloolefinischen Copolymer hergestellt ist, und ein Grundfilm auf die entgegengesetzte Seite des Trennfilms auflaminiert ist, wobei das Verfahren das Schmelzextrudieren des cycloolefinischen Copolymers in einen Film zum Herstellen eines Trennfilms und dann Laminieren des Trennfilms auf den Grundfilm umfasst.

10. Verfahren zur Herstellung eines Laminats, **dadurch gekennzeichnet, dass** eine Schicht, die ein Ionenaustauschharz enthält, auf eine Seite eines Trennfilms auflaminiert ist, der aus einem cycloolefinischen Copolymer hergestellt ist, und ein Grundfilm auf die entgegengesetzte Seite des Trennfilms auflaminiert ist, wobei das Verfahren das Herstellen einer Lösung des cycloolefinischen Copolymers und das schichtförmige Aufbringen der Lösung auf den Grundfilm umfasst.

## Revendications

1. Stratifié comprenant un film antiadhésif constitué d'un copolymère cyclooléfinique, et d'une couche contenant une résine échangeuse d'ions stratifiée sur le film antiadhésif.

2. Stratifié selon la revendication 1, dans lequel la couche contenant une résine échangeuse d'ions est une membrane formant électrolyte ou une membrane formant électrode pour une pile à combustible à électrolyte de type polymère.

3. Stratifié selon la revendication 1, dans lequel la couche contenant une résine échangeuse d'ions est un ensemble membrane-électrode pour une pile à combustible à électrolyte de type polymère.

4. Stratifié selon l'une quelconque des revendications 1 à 3, dans lequel une température de transition vitreuse (Tg) du copolymère cyclooléfinique est 120°C ou supérieure.

5. Stratifié selon l'une quelconque des revendications 1 à 4, dans lequel le copolymère cyclooléfinique est un copolymère d'éthylène et de norbornène.

6. Stratifié selon l'une quelconque des revendications 1 à 5, qui comprend en outre un film de base stratifié sur le côté du film antiadhésif opposé à la couche contenant une résine échangeuse d'ions.

7. Stratifié selon la revendication 6, qui comprend en outre un autre film antiadhésif stratifié sur le côté du film de base opposé au film antiadhésif.

8. Stratifié selon la revendication 6 ou 7, dans lequel le film de base est un film constitué de poly(téréphtalate d'éthylène) (PET), de poly(naphtalate d'éthylène) (PEN) ou de polypropylène (PP).

9. Procédé de production d'un stratifié, **caractérisé en ce qu'**une couche contenant une résine échangeuse d'ions est stratifiée sur un côté d'un film antiadhésif constitué d'un copolymère cyclooléfinique et **en ce qu'**un film de base est stratifié sur le côté opposé du film antiadhésif, le procédé comprenant l'extrusion à l'état fondu du copolymère cyclooléfinique en un film pour fabriquer un film antiadhésif, et ensuite la stratification du film antiadhésif sur le film de base.

10. Procédé de production d'un stratifié, **caractérisé en ce qu'**une couche contenant une résine échangeuse d'ions est stratifiée sur un côté d'un film antiadhésif constitué d'un copolymère cyclooléfinique et **en ce qu'**un film de base est stratifié sur le côté opposé du film antiadhésif, le procédé comprenant la préparation d'une solution du copolymère cyclooléfinique, et le revêtement de la solution sur le film de base.
